# EUROPEAN PATENT APPLICATION

(11) **EP 2 453 451 A2**
(43) Date of publication of application: **16.05.2012**
(21) Application number: 11179531.6
(22) Date of filing: 31.08.2011
(51) Int. Cl.: H01F 27/02, F03D 11/00

(54) **Transformer for wind power station and/or wind power generating facilities installed with transformer for wind power station**

(30) Priority: 12.11.2010 JP 2010253378
(71) Applicant: Hitachi Industrial Equipment Systems Co., Ltd., Tokyo 101-0022 (JP)
(72) Inventor: Hayashi, Noriyuki, Tokyo, 100-8220 (JP); Matsuo, Takahide, Tokyo, 100-8220 (JP); Shirahata, Toshiki, Niigata (JP); Ono, Junji, Niigata (JP); Ohama, Hideharu, Niigata (JP)
(74) Representative: MERH-IP Matias Erny Reichl Hoffmann

(57) **Abstract**

The transformer comprises a transformer body (1; 21) and natural convection cooling type radiators (7; 27) for release of heat of the transformer body. The transformer body (1; 21) is accommodated in a wind power generating facility (14), and air outside the wind power generating facility comes into contact with the natural convection cooling type radiators (7; 27) to cool the same.

## Description

### Background of the Invention

The present invention relates to a transformer for wind power station and wind power generating facilities installed with a transformer for wind power station, and more particular, to cooling of a transformer for wind power station.

With general wind power generating facilities, when generated output is to be fed to an electric power system, it is fed to the electric power system after being increased in voltage by a transformer. With conventional wind power generating facilities, electric power equipments such as a transformer, etc., by which electric power generated by a generator is changed in voltage and converted so as to be fed to a power network, is installed in a separate building from a tower (column).

Here, for example, JP-A-2006-9596 discloses conventional wind power generating facilities. JP-A-2006-9596 discloses an arrangement, in which a whole transformer is accommodated in a tower and a base for mounting the transformer doubles as a base for building the tower. In the case the whole transformer is accommodated in the tower, however, heat generated from the transformer stays in the tower and so an improvement in cooling performance is needed.

For example, Japanese Patent No. 3715238 discloses an example of wind power generating facilities constructed such that a transformer is accommodated in a tower to achieve an improvement in cooling performance. Japanese Patent No. 3715238 discloses an arrangement, in which the transformer and a wall surface of the tower are included in a cooling circuit in the form of a loop and heat generated from the transformer is released from the wall surface of the tower.

Also, for example, JP-A-63-213330 discloses a technology relating to transformers at large. JP-A-63-213330 discloses a transformer for buildings, which is installed on a floor of a building, of which a transformer body is accommodated in an electric room accommodating an electric installation, and in which natural convection cooling type radiators connected to the transformer body are mounted outside the floor.

According to the contents described in JP-A-2006-9596, an improvement in cooling performance is needed.

Also, with Japanese Patent No. 3715238, air-cooling is hardly conceivable in view of a capacity of heat release but it is considered that an air for further cooling of a cooling medium, such as oil or the like, which has taken heat from the transformer body, circulates in the cooling circuit being a loop formed by the wall surface of the tower. In this case, however, the cooling medium such as oil or the like is cooled by means of an air circulating in the tower and so there is a limit on the capability for cooling of the cooling medium such as oil or the like.

Also, with JP-A-63-213330, the radiators are simply mounted outside the building and consideration is not adequately taken into with respect to efficiency in cooling performance such that an improvement in cooling performance cannot be achieved, for example, at the time of a large heat build-up.

Hereupon, it is an object of the invention to provide a transformer for wind power station or wind power generating facilities installed with a transformer for wind power station, in which an improvement in cooling performance can be achieved.

### Brief Summary of the Invention

A transformer for wind power station, according to the invention, is accommodated in wind power generating facilities and comprises a transformer body and radiators for release of heat of the transformer body, the transformer body is accommodated in the wind power generating facilities, and an air outside the wind power generating facilities comes into contact with the radiators to cool the same.

Also, wind power generating facilities according to the invention comprises the transformer for wind power station, a tower, a nacelle arranged rotatably on a top of the tower, rotor blades mounted on the nacelle to catch wind to revolve, and a generator connected to the rotor blades to rotate a rotor upon revolution of the rotor blades to perform a generating operation.

According to invention, it is possible to provide a transformer for wind power station or wind power generating facilities installed with a transformer for wind power station, in which an improvement in cooling performance can be achieved.

Other objects, features and advantages of the invention will become apparent from the following description of the embodiments of the invention taken in conjunction with the accompanying drawings.

### Brief Description of the Drawings

Fig. 1 is a side view of a wind power generating facility according to a first embodiment.
Fig. 2 is a plan view of a transformer portion according to a second embodiment.
Fig. 3 is a side view of a transformer portion according to a third embodiment.
Fig. 4 is a side view of a transformer portion according to a fourth embodiment.

### Detailed Description of the Invention

Referring to the drawings, preferred embodiments for carrying out the invention will be described hereinafter. The following descriptions are only examples of embodiments and are therefore intended not to consider that the content of the invention is limited to such embodiments.

### [A First Embodiment]

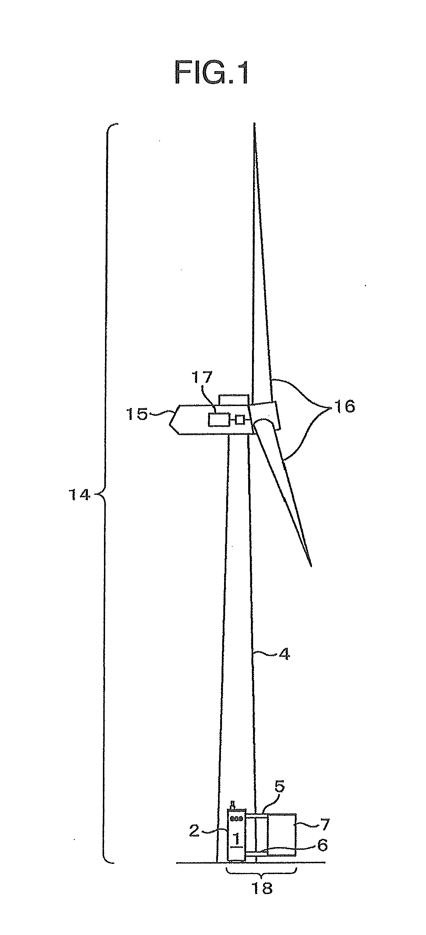

A transformer for wind power station and wind power generating facilities according to a first embodiment will be described hereinafter with reference to Fig. 1.

Wind power generating facilities 14 according to the first embodiment schematically comprise a tower (column) 4 built on a base, a nacelle 15 arranged on a top of the tower 4 and supported rotatably with the tower 4 as a support shaft, rotor blades 16 mounted at a forward end of the nacelle 15 to catch the wind to revolve, and a generator 17 connected to the rotor blades 16, and a transformer 18 for wind power station is divided into a body and radiators and arranged inside and outside the wind power generating facility 14 as described hereinafter.

The transformer 18 for wind power station comprises a transformer body 1, an upper pipe 5, a lower pipe 6, and natural convection cooling type radiators 7, and the transformer body 1 is mounted inside the tower 4. The transformer body 1 is formed by filling an insulating, cooling medium 3, such as mineral oil, etc., into a transformer tank 2, and the transformer tank 2 comprises a closed container, in which an iron core and an exciting winding mounted on the iron core are received. The natural convection cooling type radiators 7 comprise a plurality of radiating panels (not shown), in which the cooling medium 3 flows. The radiating panels are provided perpendicularly to the upper and lower pipes 5, 6 and aligned a lot in an axial direction of the pipes 5, 6. The natural convection cooling type radiator 7 is connected to the transformer tank 2 of the transformer body 1 through the upper pipe 5 and the lower pipe 6 and arranged outside the tower 4.

The transformer body 1 is arranged inside the tower 4 because high-voltage bushings and wirings are mounted outside the transformer body 1 to cause an accident, such as electrical shock or the like, and failure of the transformer itself upon contact by a person. By mounting the transformer body 1 inside the tower 4, it is possible to for only a limited number of engineers to approach a high-voltage portion, so that an accident and a failure can be prevented.

On the other hand, the radiators do not comprise any high-voltage portion and so only an accident such as oil spillage is caused. Also, an oil level gauge is mounted to the transformer whereby an alarm is issued when oil is reduced in quantity, and a control system for stoppage of operation is incorporated, so that it is possible to avoid an accident adequately.

Also, in case of mounting the radiators outdoors as in the embodiment, an increase in corrosion resistance is needed. The tank, the cover, the radiators for the transformer are increased in corrosion resistance by coating common steel sheets both indoors and outdoors except in case of being mounted in salt damage regions (along the seaside) and special atmospheres. Subsequently, according to an extent in case of salt damage regions and special atmospheres, an improvement in corrosion resistance is achieved by adopting, as materials of steel sheet, ferrite stainless steel (stainless steel being more liable to rust, than austenite stainless steel such as commonly known SUS 304, etc.) or austenite stainless steel, changing the thickness of a coated film and the material of coating, performing zinc spraying (a kind of plating) on a coating substrate, performing hot dip galvanizing, or the like.

Subsequently, the operation of the wind power generating facility 14 in generating operation will be described. The generating operation of the wind power generating facility 14 is performed by revolving the rotor blades 16 to rotate a rotor of the generator 17 when the wind velocity is above a predetermined lower limit of wind velocity (generation starting wind velocity or cut-in wind velocity) and below a predetermined upper limit of wind velocity (generation stopping wind velocity or cut-out wind velocity). The reason why the generating operation is stopped in case of the wind velocity being larger than the cut-out wind velocity is that the wind power generating facility 14 should be protected against high-wind.

In the generating operation, electric power generated by the generator 17 is raised in voltage by the transformer 18 to be fed to an electric power system. That is, in the generating operation, a loss generated by an electric current flowing in the transformer 18 generates heat in the iron core and the exciting winding within the transformer 18. At this time, the cooling medium 3 in the transformer tank 2 takes heat generated from the iron core and the winding. The cooling medium 3 having taken heat generated from the iron core and the winding rises in temperature to be increased in volume, so that it is decreased in density. The cooling medium 3 having been decreased in density flows upward in natural convection to flow through the upper pipe 5 into upper sides of the natural convection cooling type radiators 7 mounted outside the tower 4. The cooling medium 3 having flowed into the natural convection cooling type radiators 7 releases heat to the atmosphere through the radiating panels owing to natural convection of an air outside the natural convection cooling type radiators 7 and forced convection of wind blowing outside the tower 4. The cooling medium 3, heat of which has been taken by the atmosphere, drops in temperature to be decreased in volume, so that it is increased in density to give rise to a downwardly flowing natural convection. Thereby, the cooling medium 3 having released heat goes down in the natural convection cooling type radiators 7 to return again to the transformer tank 2 through the lower pipe 6. In this manner, a major part of heat generated from the iron core and the exciting winding in the transformer body 1 is released directly to the atmosphere from the cooling medium 3 flowing in the natural convection cooling type radiators 7, so that an air in the tower 4 of the wind power generating facility is not so much increased in temperature.

Here, the necessity for cooling of the transformer 18 is high in some cases and low in some cases. In case of wind power generation, electric power generated from the generator 17 correlates to the magnitude of wind velocity such that the larger the wind velocity, the larger the electric power as generated. That heating value of the winding, which accounts for a large part of the heating value generated from the transformer 18 serving to change the electric power generated from the generator 17 in voltage so as to enable the same to be supplied to a power network, is approximately proportional to the square of the electric power, with the result that the larger the wind velocity, the higher the necessity for cooling of the transformer 18 and conversely the smaller the wind velocity, the lower the necessity for cooling of the transformer 18.

In the embodiment, while the natural convection cooling type radiators 7, which releases a large portion of heat generated from the iron core and the exciting winding in the transformer body 1 for wind power station, is arranged outside the tower 4, the wind velocity is large in the case where the necessity for cooling of the transformer 18 is high, in which case forced convection around the natural convection cooling type radiators 7 increases at the same time. Accordingly, an extent of heat release increases and so an improvement in cooling efficiency is achieved.

On the other hand, when the necessity for cooling of the transformer 18 is low, the wind velocity is small and forced convection around the natural convection cooling type radiators 7 decreases, in which case the necessity for cooling of the transformer 18 is inherently low and so there is no specific obstacle. Also, even in this case, natural convection of an air outside the natural convection cooling type radiators 7 is generated to the minimum, so that a certain cooling performance can be maintained.

As described above, according to the embodiment, air outside the wind power generating facility 14 is made to come into contact with the natural convection cooling type radiators 7 whereby an improvement in cooling efficiency is achieved in the case where heat generation increases to lead to the need of heat release, so that an improvement in cooling performance can be achieved.

Also, according to the embodiment, the natural convection cooling type radiators 7 is besides arranged outside the wind power generating facility 14, so that air around the wind power generating facility 14 is made liable to come into contact with the natural convection cooling type radiators 7, thus enabling achieving an improvement in cooling performance. As a result of an improvement in cooling performance, it is possible to make the natural convection cooling type radiators 7 small in size. Also, since the natural convection cooling type radiators 7 serving to release a large portion of heat of the transformer 18 is arranged outside the wind power generating facility 14, it is unnecessary to provide any air conditioner in the tower 4, or it is possible to sharply decrease an air conditioner in size.

Further, a typical cause for a disadvantage that repair and replacement are necessitated in the operation of the transformer 18 involves spillage of oil used as the cooling medium 3. The structure of the transformer is decreased in wall thickness by corrosion or the like to be made thin to make a hole to thereby cause oil spillage and so a portion of the structure being thin in plate thickness is liable to cause oil spillage. In order to facilitate transfer of heat to the atmosphere from the cooling medium 3, the natural convection cooling type radiators 7 is small in plate thickness as compared with the transformer tank 2 and the upper and lower pipes 5, 6, so that a danger of generation of oil spillage is the highest in the natural convection cooling type radiators 7. In the embodiment, the natural convection cooling type radiators 7 is arranged outside the wind power generating facilities 14, so that there is an advantage that simple replacement of the natural convection cooling type radiators 7 is possible and an increase in plate thickness is possible so as to prevent generation of oil spillage because an improvement in cooling efficiency can be achieved by bringing air outside the wind power generating facility 14 into contact with the natural convection cooling type radiators 7.

Also, while the embodiment has been described exemplarily with respect to the case where the transformer body 1 is mounted inside the tower 4, a limited number of engineers can approach a high-voltage portion to prevent accidents and failures provided that the transformer body is mounted inside the wind power generating facility such as the nacelle or the like.

### [A Second Embodiment]

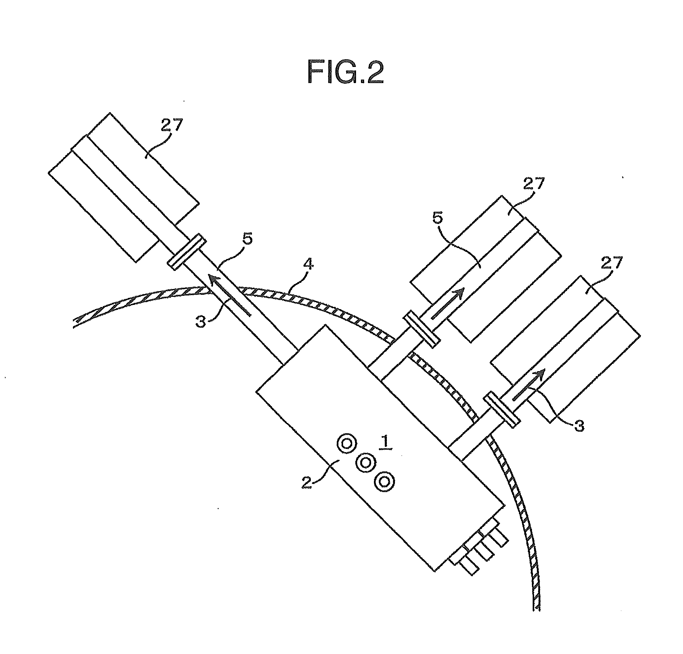

A transformer for wind power station and wind power generating facility according to a second embodiment will be described hereinafter with reference to Fig. 2. In addition, a duplicate description of the same content as that of the first embodiment is omitted and only a difference between the present embodiment and the first embodiment will be described.

A different construction of the second embodiment from that of the first embodiment is that plural natural convection cooling type radiators 27 are mounted outside the tower 4 and arranged in two perpendicular directions.

Wind flowing outside the tower 4 is momently and variously changed in direction. The radiating panels of the natural convection cooling type radiators 27 are provided perpendicularly to the upper and lower pipes 5, 6 and aligned a lot in an axial direction of the pipes 5, 6, so that when wind blows perpendicularly to the pipes 5, 6, the wind passes smoothly between the radiating panels and the natural convection cooling type radiators 27 are good in cooling performance, but when wind blows in the axial direction of the pipes 5, 6, the radiating panels in the windward obstruct flow of the wind and causes a decrease in heat release performance.

In the first embodiment, since all the natural convection cooling type radiators 7 are in the same direction, when wind blows perpendicularly to the pipes 5, 6, all the natural convection cooling type radiators 7 are good in cooling performance, but when wind blows in the axial direction of the pipes 5, 6, all the natural convection cooling type radiators 7 are decreased in cooling performance. Therefore, the natural convection cooling type radiators 7 as a whole are varied much in heat release performance depending upon wind direction.

In contrast, according to the second embodiment, since the natural convection cooling type radiators 27 are arranged perpendicularly to each other, all the natural convection cooling type radiators 27 are not degraded in cooling performance even when wind blows in any direction, so that all the natural convection cooling type radiators 27 can get an average, less variable heat release performance.

Also, when instead of the perpendicular arrangement, plural radiators are arranged in plural directions rather than in one direction, all the natural convection cooling type radiators 27 can get an average, less variable heat release performance.

Also, in order that all the natural convection cooling type radiators 27 get an average, less variable heat release performance, the natural convection cooling type radiators 27 are not necessarily arranged in two directions but the heat release performance is further averaged and less varied in three directions with no problem.

In addition, direct sunlight as well as wind direction is responsible for a phenomenon that the arrangement of the natural convection cooling type radiators 7 mounted outside the tower 4 affects the cooling performance of the natural convection cooling type radiators 7. When the natural convection cooling type radiators 7 are exposed to direct sunlight, radiation heat from the sun enters the natural convection cooling type radiators 7 and so heat gain due to radiation from the sun as well as the heating value of the transformer is required to be released to the atmosphere. Therefore, when the natural convection cooling type radiators 7 are arranged outside the wind power generating facility 14, there is a possibility that the natural convection cooling type radiators 7 are increased in temperature by the heat gain from the sun.

In order to prevent the natural convection cooling type radiators 7 from being decreased in cooling performance, it suffices to prevent the natural convection cooling type radiators 7 from being exposed to direct sunlight of the sun and it is effective to arrange the natural convection cooling type radiators 7 on the north side of the tower 4 in the northern hemisphere and arrange the natural convection cooling type radiators 7 on the south side of the tower 4 in the southern hemisphere so that the natural convection cooling type radiators 7 are disposed in the shade of the tower 4.

Also, the problem of temperature rise caused by the sunshine can be avoided by mounting a shielding plate between the sun and the natural convection cooling type radiators 7.

### [A Third Embodiment]

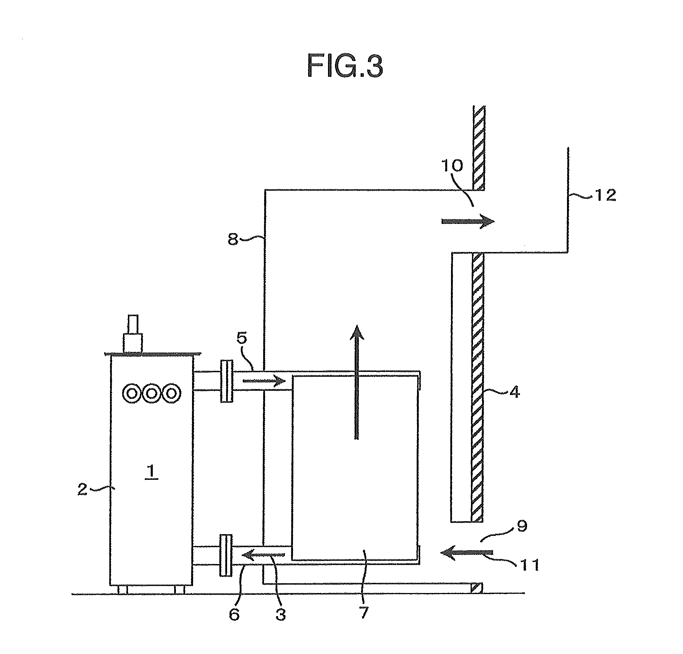

A transformer for wind power station and wind power generating facility according to a third embodiment will be described hereinafter with reference to Fig. 3. In addition, a duplicate description of the same content as those of the respective embodiments is omitted and only a difference between the present embodiment and the respective embodiments will be described.

In the third embodiment, not only a transformer body 1 of the transformer for wind power station but also natural convection cooling type radiators 7 are mounted inside the tower 4 of the wind power generating facility 14. A cooling duct 8 is provided inside the tower 4 of the wind power generating facility 14 in a manner to surround the peripheries of the natural convection cooling type radiators 7, and the cooling duct 8 has a lower portion thereof communicated to the atmosphere through an intake port (inlet) 9 and has an upper portion thereof communicated to the atmosphere through an exhaust port (outlet) 10. Also, a windbreak plate 12 is mounted outside the exhaust port 10 to prevent wind from blowing into the exhaust port 10.

According to the third embodiment, since the atmospheric air can freely come into and go out of the cooling duct 8 through the intake port 9 and the exhaust port 10, natural convection generated by radiating panels of the natural convection cooling type radiators 7 generates a flow of air 11, which enters the cooling duct 8 from the intake port 9, flows upward among the radiating panels in the cooling duct 8, and flows out of the tower 4 from the exhaust port 10. Here, the natural convection generated by the radiating panels of the natural convection cooling type radiators 7 indicates a flow generated when the atmospheric air having taken heat from the radiating panels of the natural convection cooling type radiators 7 to be made warm is increased in volume to be decreased in density to flow upward.

Also, while the windbreak plate 12 is mounted outside the exhaust port 10 to prevent wind from blowing into the exhaust port 10, wind flowing outside the tower 4 can be blown into the intake port 9 but not into the exhaust port 10, so that the wind agrees in flow path with the flow (the intake port 9 → the cooling duct 8 → the exhaust port 10) of the natural convection and the velocity of flow generated by natural convection in the cooling duct 8 is further increased by forced convection, which accompanies the wind. That is, heat of a cooling medium 3 is released directly to the atmosphere from the natural convection cooling type radiators 7 by natural convection of air outside the natural convection cooling type radiators 7 and forced convection generated when the wind blowing outside the tower 4 blows into the cooling duct 8.

Also in this case, when the wind velocity is large and the necessity for cooling of the transformer 18 is high, forced convection around the natural convection cooling type radiators 7 increases at the same time and an extent of heat release from the natural convection cooling type radiators 7 increases, so that an improvement in cooling efficiency is achieved.

Accordingly, in the third embodiment, air outside the wind power generating facility 14 is made to come into contact with the natural convection cooling type radiators 7 to thereby lead to an increase in heat release and an improvement in cooling efficiency is achieved in the case where heat release is needed, so that an improvement in cooling performance can be achieved.

Also, an arrangement, in which the intake port 9 of the cooling duct 8 is disposed on a lower side and the exhaust port 10 is disposed on an upper side, makes it possible to generate air flow from the intake port 9 on the lower side to the exhaust port 10 on the upper side owing to natural convection generated by radiating panels of the natural convection cooling type radiators 7 and to achieve an improvement in cooling performance. Further, according to the third embodiment, since the windbreak plate 12 is mounted on the exhaust port 10 outside the exhaust port 10, the atmosphere can be prevented from flowing to the intake port 9 from the exhaust port 10 and agrees in flow direction with the natural convection, so that it is possible to achieve a further improvement in cooling performance.

Also, taking into consideration that the wind flowing outside the tower 4 is momently and variously changed in direction, it goes without saying that it is desired that the intake port 9 and the exhaust port 10 be provided not in one location on the tower 4 but in plural locations.

In addition, while description has been given in the respective embodiments to the case where the transformer body 1 is arranged inside the tower 4 and air outside the tower 4 comes into contact with the natural convection cooling type radiators 7 whereby the natural convection cooling type radiators 7 are cooled, this is only an embodiment and it goes without saying that a similar effect can be produced by an arrangement, in which air outside the wind power generating facilities comes into contact with the natural convection cooling type radiators 7, like the case where the transformer body 1 is arranged inside the nacelle 15 instead of the tower 4 and air outside the nacelle 15 comes into contact with the natural convection cooling type radiators 7 whereby the natural convection cooling type radiators 7 are cooled.

### [A Fourth Embodiment]

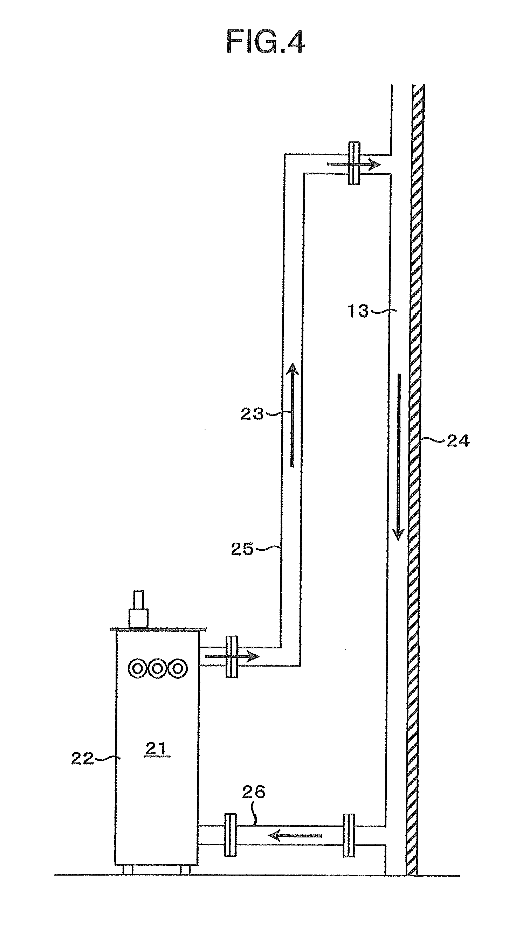

A transformer for wind power station and wind power generating facility according to a fourth embodiment will be described hereinafter with reference to Fig. 4. In addition, a duplicate description of the same content as those of the respective embodiments is omitted and only a difference between the fourth embodiment and the respective embodiments will be described.

With a transformer for wind power station, according to the fourth embodiment, a transformer body 21 is accommodated inside a tower 24 of the wind power generating facility 14 and an outer wall of the tower 24 is double-structured to form a tower outer wall double-structured flow passage 13 communicated vertically. Thereby, an inner wall surface side of the outer wall of the tower 24 is included in the tower outer wall double-structured flow passage 13. The tower outer wall double-structured flow passage 13 and a tank 22 of the transformer body 21 are connected to each other by an upper pipe 25 and a lower pipe 26.

With the construction, a cooling medium 23 in the transformer tank 22 takes heat generated from an iron core and a winding to rise in temperature to be decreased in density. The cooling medium 23 having been decreased in density flows through the upper pipe 25 into an upper portion of the tower outer wall double-structured flow passage 13 formed in the outer wall of the tower 24. Wind blowing outside the tower 24 flows outside the tower outer wall double-structured flow passage 13, which is double-structured, and the cooling medium 23 comes into contact with an inner wall surface of the tower 24 to release heat to the atmosphere through the wall surface. The cooling medium having released heat to the atmosphere drops in temperature and is increased in density to go down in the tower outer wall double-structured flow passage 13, which is double-structured, to form a flow returning to the transformer tank 22 from the lower pipe 26. Therefore, a large portion of heat generated from the transformer body 21 is released directly to the atmosphere from the cooling medium 23, which flows through the tower outer wall double-structured flow passage 13, which is double-structured, through the outer wall of the tower 24. Accordingly, air in the tower 24 of the wind power generating facility, which accommodates therein the transformer body 21, does not so much rise in temperature, so that it is possible to achieve an improvement in cooling performance. As a result of an improvement in cooling performance, it is possible to sharply decrease air conditioning equipments in the tower in size or dispense with such air conditioning equipments. Also, according to the fourth embodiment, even without the provision of natural convection cooling type radiators, it is possible to cool the cooling medium 23 and it is possible to sharply achieve cost reduction and to realize miniaturization.

In addition, while an explanation has been given in the embodiment to the case where the transformer body 1 is arranged inside the tower 4 and an inner wall surface of the tower 4 forms the tower outer wall double-structured flow passage 13 for the natural convection cooling type radiators 7, this is only an embodiment and it goes without saying that a similar effect can be produced by an arrangement, in which a cooling medium passes in a transformer and a flow passage in contact with an inner all surface side out of wall surfaces, which form a wind power generating facility, extends, like the case where an inner wall surface of the nacelle 15 instead of the tower 4 or in addition to the tower 4 forms the tower outer wall double-structured flow passage 13.

Also, the respective embodiments may further comprise a wind direction meter for measurement of wind direction and radiators may be moved in a manner to keep out of a lee side according to a wind direction as measured. In this case, a high cooling performance can be obtained at all times to be further advantageous.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A transformer (18) for wind power station comprising a transformer body (1; 21) accommodated in a wind power generating facility (14) and radiation means (7; 27) for releasing heat of the transformer body, wherein the radiation means (7; 27) are adapted to be in contact with air outside the wind power generating facility (14).

2. The transformer for wind power station according to claim 1, wherein the radiation means (7; 27) is arranged outside the wind power generating facility (14) and is adapted to be cooled by the air outside the wind power generating facility (14).

3. The transformer for wind power station according to claim 2, wherein the transformer (18) for wind power station is arranged on the north side with respect to the wind power generating facility (14) when installed in the northern hemisphere and arranged on the south side with respect to the wind power generating facility (14) when installed in the southern hemisphere.

4. The transformer for wind power station according to claim 2 or 3, wherein the radiation means comprises plural radiators (7; 27) arranged in plural directions.

5. The transformer for wind power station according to claim 4, wherein some of the plural radiators (27) are arranged perpendicular to the others of the plural radiators (27).

6. The transformer for wind power station according to claim 1, wherein a flow passage, through which the air outside the wind power generating facility (14) to cool the radiation means passes, is provided inside the wind power generating facility (14) and
the radiation means (7) is accommodated inside the wind power generating facility (14) and arranged in a flow passage, which is provided inside the wind power generating facility (14) and through which the air outside the wind power generating facility (14) passes.

7. The transformer for wind power station according to claim 6, wherein an inlet (9) of the flow passage is arranged below an outlet (10) of the flow passage.

8. The transformer for wind power station according to claim 7, wherein a windbreak plate (12) is mounted on the outlet (10) of the flow passage.

9. A transformer for wind power station, accommodated in a wind power generating facility (14), wherein a cooling medium passes in the transformer (21) and passes through a flow passage (13) in contact with an inner wall surface of the wind power generating facility (14).

10. The transformer for wind power station according to claim 9, wherein an inlet (9) for the cooling medium on the transformer (18) is arranged below an outlet (10) for the cooling medium on the transformer (18).

11. The transformer for wind power station according to claim 9 or 10, wherein the flow passage (13) in contact with the inner wall surface of the wind power generating facility (14) is arranged vertically.

12. A wind power generating facility (14) comprising: the transformer (18) for wind power station according to any one of claims 1 to 11; a tower (4; 24); a nacelle (15) arranged rotatably on a top of the tower; rotor blades (16) mounted on the nacelle to catch wind to revolve and a generator (17) connected to the rotor blades to rotate a rotor upon revolution of the rotor blades to perform a generating operation.

13. The wind power generating facilities according to claim 12, further comprising a wind direction meter for measurement of wind direction and wherein the transformer (18) for wind power station is movable to a position, which keeps out of a lee side.

14. A wind power generating facility (14) comprising: the transformer (18) for wind power station according to any one of claims 2 to 5; a tower (4; 24); a nacelle (15) arranged rotatably on a top of the tower; rotor blades (16) mounted on the nacelle to catch wind to revolve; a generator (17) connected to the rotor blades to rotate a rotor upon revolution of the rotor blades to perform a generating operation and a shielding plate, which covers the transformer (18) for wind power station.
